# EUROPEAN PATENT SPECIFICATION

(11) **EP 2 559 313 B1**
(45) Date of publication and mention of the grant of the patent: **21.03.2018**
(21) Application number: 11769109.7
(22) Date of filing: 15.04.2011
(51) Int. Cl.: H04W 74/04, H04W 52/02

(54) **METHOD AND DEVICE OF MANAGING MTC DEVICES IN A MTC NETWORK ENVIRONMENT**
VERFAHREN UND VORRICHTUNG ZUR VERWALTUNG VON MTC-VORRICHTUNGEN IN EINER MTC-NETZWERKUMGEBUNG
PROCÉDÉ ET DISPOSITIF DE GESTION DE DISPOSITIFS MTC DANS UN ENVIRONNEMENT DE RÉSEAU MTC

(30) Priority: 15.04.2010 IN 1064CH2010
(43) Date of publication of application: 20.02.2013
(73) Proprietor: Samsung Electronics Co., Ltd., Gyeonggi-do 443-742 (KR)
(72) Inventor: JAMADAGNI, Satish, Nanjunda, Swamy, Bangalore 560093 (IN)
(74) Representative: HGF Limited
(86) International application number: PCT/KR2011/002693
(87) International publication number: WO 2011/129643

(56) References cited:
- WO-A1-03/063535
- WO-A2-2008/116022
- SAMSUNG: "Time Controlled Key Issue", 3GPP DRAFT; S2-100194-TIME-CONTROL-REV4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432794, [retrieved on 2010-01-12]
- SAMSUNG: "Randomized Time Control", 3GPP DRAFT; S2-101127-RANDOMIZED-TIME-CONTROL-03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 16 February 2010 (2010-02-16), XP050433708, [retrieved on 2010-02-16]
- '3rd Generation Partnership Project; Technical Specification Group Services and System Aspects; Service requirements for Machine-Type Communications (MTC); Stage 1 (Release 10)' 3GPP TS 22.368 V10.0.0 (2010-03) March 2010, XP050402279
- '3rd Generation Partnership Project; Technical Specification Group Services and System Aspects; System Improvements for Machine-Type Communications; (Release 10)' 3GPP TR 23.888 V0.3.2 (2010-03) March 2010, XP002589912
- '3rd Generation Partnership Project; Technical Specification Group Services and System Aspects; Study on Facilitating Machine to Machine Communication in 3GPP Systems; (Release 8)' 3GPP TR 22.868 V8.0.0 (2007-03) March 2007, XP050361381

## Description

### Technical Field

The present invention relates to the field of Machine-to-Machine (M2M) type communications (MTC), and more particularly relates to managing MTC devices in an MTC network environment.

### Background Art

Machine to Machine (M2M) type communication (MTC) is currently being discussed in the third generation partnership project (3GPP) forum and the requirements for M2M architecture have been specified. Typically, a MTC network environment includes a plurality of MTC devices, a MTC network having a plurality of network cells, and a plurality of MTC servers. One or more MTC devices periodically transmit MTC data intended for an associated MTC server to the MTC network such that the MTC network communicates the MTC data to the intended MTC server. As an example, consider a smart metering application which requires the MTC devices to send their data around the same time, e.g., every hour or during a limited time period during off peak hours. However, when a large number of MTC devices are trying to access the MTC network at the same time, a huge amount of resources would be effectively wiped out. Even the MTC devices may suffer from RACH failures due to successive contention failure.

Samsung, "Time Controlled Key Issue", 3GPP Draft; S2-100194-Time-Control-Rev4, 3rd Generation Partnership Project (3GPP), Mobile Competence Centre ; 650, Route Des Lucioles ; F-06921 Sophia-Antipolis Cedex ; France, 12 January 2010. This document discloses a time controlled key issue and proposes a solution which is to add a new key issue in which the network operator constrains the behaviour of an MTC device.

Samsung, "Randomized Time Control", 3GPP Draft; S2-101127-Randomized-Time-Control-03, 3rd Generation Partnership Project (3GPP), Mobile Competence Centre; 650, Route Des Lucioles; F-06921 Sophia-Antipolis Cedex ; France, 16 February 2010. Restricting the time in which an MTC device is allowed to interact with the network to either send or receive data or perform other signaling improves the scalability of the network and allows for operating efficiency in the MTC device. This document discloses a randomized time control solution to the time control key issue.

### Disclosure of Invention

### Technical Problem

In order reduce wastage of resources, one or more existing time controlled access solutions schedule the MTC devices to wake up at a scheduled time and transmit the MTC data to the MTC network. Upon transmission, the MTC devices go to sleep when the MTC devices are scheduled to sleep based on a static timer value programmed in a subscriber identification module (SIM) card installed in each of the MTC devices. Since the timer value is static, the MTC network has no control over the number of MTC devices accessing the MTC network at a single point of time, thereby affecting the performance of the entire MTC network system.

In another existing solution, the MTC devices go to sleep and wake up to transmit the MTC data based on system information communicated by associated network cell on which the MTC devices are camping. However, the MTC devices may need to continuously keep reading system information to determine if the MTC devices are allowed to access the MTC network at a given time.

### Solution to Problem

According to a first aspect of the present invention there is provided a method performed by a Machine-to-Machine, M2M, type Communication, MTC, device for communicating MTC data in a MTC network environment, comprising: receiving a notification message including a timer value from an MTC network; entering, upon receiving the notification message including the timer value for a duration equal to the timer value, an inactive mode; entering, upon an expiration of the timer value, an active mode from the inactive mode; determining a size of MTC data that the MTC device is allowed to transmit during the active period of the MTC device by querying the MTC network via a camped network cell; and transmitting MTC data to an MTC server associated with the MTC device via the MTC network during the active mode of the MTC device based on the determination.

According to a second aspect of the present invention there is provided a Machine-to-Machine, M2M, type Communication, MTC, device for communicating MTC data in an MTC network environment, the device including a transceiver, and a processor, and being arranged to perform the above method.

According to a third aspect of the present invention there is provided a method performed by a Machine-to-Machine, M2M, type Communication, MTC, network for managing at least one MTC device in an MTC network environment, comprising: sending, to the at least one MTC device, a notification message including a timer value, wherein the timer value indicates an inactive period associated with the at least one MTC device; receiving a query from the at least one MTC device to determine a maximum length of MTC data allowed for transmission by the at least one MTC device; determining a length of MTC data allowed for transmission by the at least one MTC device during an active period of the at least one MTC device; communicating length information to the at least one MTC device based on the determination of the length of MTC data allowed for transmission by the at least one MTC device during the active period; and receiving MTC data intended for an associated MTC server via an associated network cell during the active period of the at least one MTC device based on the length information.

According to a fourth aspect of the present invention there is provided a Machine-to-Machine, M2M, type Communication, MTC, network for managing at least one MTC device in an MTC network environment, the device including at least one network cell, at least one MTC server, and a processor, and being arranged to perform the above method.

Other features of the embodiments will be apparent from the accompanying drawings and from the detailed description that follows.

### Brief Description of Drawings

Figure 1 illustrates a schematic diagram of a machine-to-machine (M2M) type communication (MTC) network environment for managing MTC devices by a MTC network, according to one embodiment.
Figure 2 is a process flowchart illustrating an exemplary method of managing the MTC devices by a MTC network, according to one embodiment.
Figure 3 is a process flowchart illustrating an exemplary method of communicating MTC data to the MTC network, according to one embodiment.
Figure 4 is a block diagram of an exemplary MTC device showing various components for implementing embodiments of the present subject matter.

The drawings described herein are for illustration purposes only and are not intended to limit the scope of the present disclosure in any way.

### Mode for the Invention

The present invention provides a method and system for managing one or more MTC devices in a MTC network environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

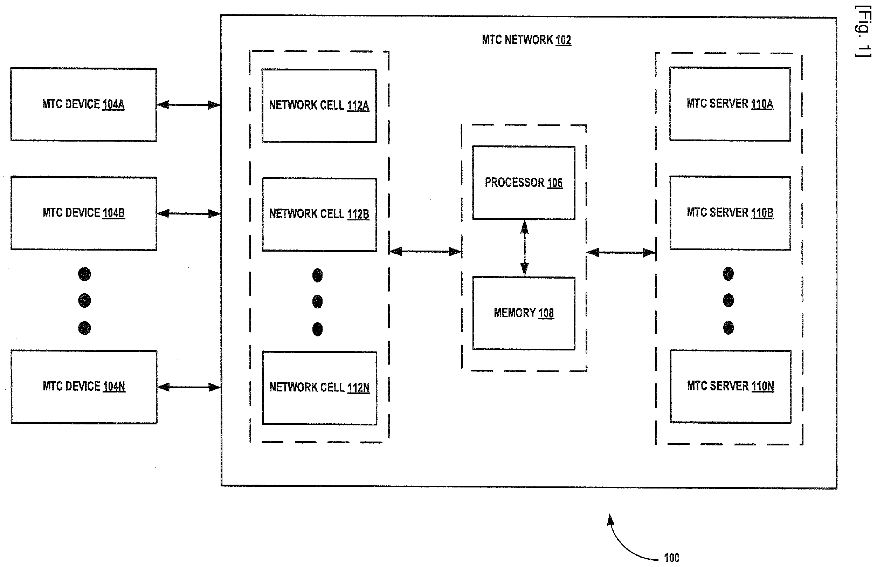

Figure 1 illustrates a schematic diagram of a machine-to-machine (M2M) type communication (MTC) network environment 100 for managing MTC devices 104A-N by a MTC network 102, according to one embodiment. In Figure 1, the MTC network environment 100 includes a MTC network 102 and MTC devices 104A-N. The MTC network 102 includes a processor 106, memory 108, MTC servers 110A-N, and network cells 112A-N.

In one embodiment, each of the MTC devices 104A-N is operable for transmitting MTC data (e.g., smart meter data, CE device data, autonomous data from medical devices, etc.) intended to its associated one of the MTC servers 110A-N to the MTC network 102 via one the network cells 112A-N in a time controller manner. In this embodiment, the MTC network 102 communicates a timer value upon complete reception of MTC data from the MTC devices 104A-N. In one example embodiment, the timer value in the notification message is a home public land mobile network (HPLMN) timer value. The one or more MTC devices 104A-N applies the HPLMN timer value and enters in an inactive mode till the expiry of the HPLMN timer value. Further, upon expiry of the HPLMN timer value, the one or more MTC devices 104A-N enters in an active mode from the inactive mode and transmits MTC data to the MTC network 102 via one of the network cells 112A-N. The MTC network 102 then communicates a new HPLMN timer value upon successful reception of the MTC data and the cycle continues.

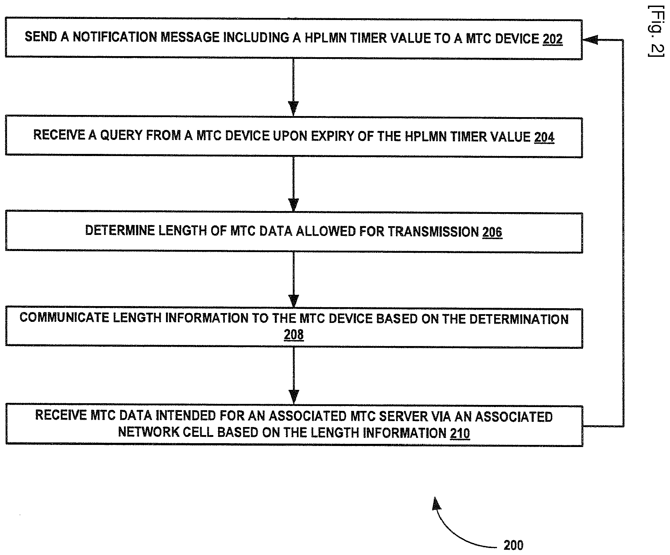

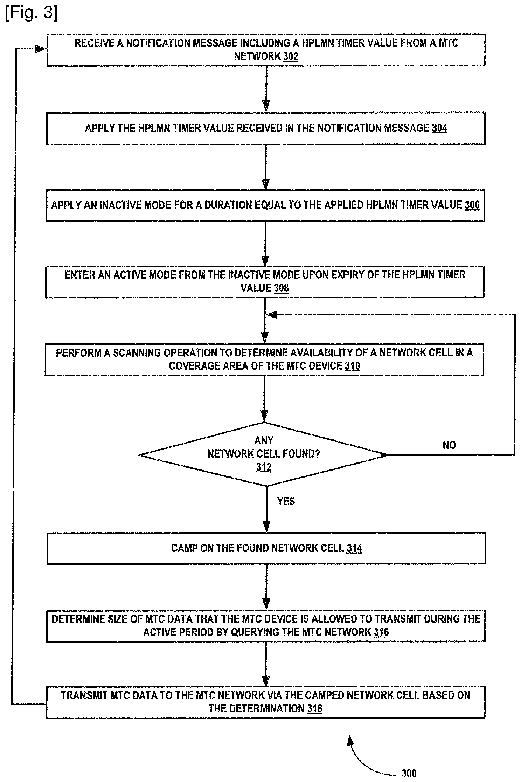

In one exemplary implementation, the memory 108 is configured to temporarily store instructions, that when executed by the processor 106, cause the processor 106 to generate and communicate a HPLMN timer value to associated one of the MTC devices 104A-N in real time upon successful reception of MTC data from the associated one of the MTC devices 104A-N. It is appreciated that, the HPLMN timer value communicated to the associated one of MTC devices 104A-N controls sleep time and wake up time of the associated one of the MTC devices 104A-N. The process of managing the MTC devices 104A-N described in greater detail in description of Figures 2 and 3.

Figure 2 is a process flowchart 200 illustrating an exemplary method of managing the MTC devices 104A-N by the MTC network 102, according to one embodiment. For purpose of illustration, the below description is made with reference to a single MTC device 104A. At step 202, a notification message including a HPLMN timer value is sent to the MTC device 104A. In one embodiment, during an initial network attach procedure, the MTC network 102 receives an initial network attach message from the MTC device 104A. If the initial network attach message is accepted, the MTC network 102 sends the notification message including the HPLMN timer value to the MTC device 104A. The notification message can be the "Attach accept" message or any other non access stratum (NAS) message that is sent by the MTC network 102 to the MTC device 104A. At step 204, a query is received from the MTC device 104A upon expiry of the HPLMN timer value to determine maximum length of MTC data allowed for transmission by the MTC device 104A.

At step 206, length of MTC data allowed for transmission by the MTC device 104A during an active period of the MTC device 104A is determined. At step 208, length information is communicated to the MTC device 104A based on the determination at step 206. At step 210, MTC data intended for an associated MTC server (e.g., the MTC server 110A) is received from the MTC device 104A via an associated network cell (e.g., the network cell 112A) based on the length information. It can be noted that, the MTC network 102 rejects the MTC data if the MTC device 104A sends the MTC data prior to the expiry of the HPLMN timer. The process then continues at step 202 upon complete reception of the MTC data. It has to be understood that the above steps can be achieved without any restrictions on the length of MTC data, the MTC device 104 can transmit.

Figure 3 is a process flowchart 300 illustrating an exemplary method of communicating MTC data to the MTC network 102, according to one embodiment. At step 302, a notification message including a HPLMN timer value is received from the MTC network 102. In one embodiment, during an initial network attach procedure, the MTC device 104A sends an initial network attach message to the MTC network 102. If the initial network attached message is accepted, the MTC device 104A receives the notification message including the HPLMN timer value from the MTC network 102. At step 304, the HPLMN timer value received in the notification message is applied by the MTC device 104A. At step 306, an inactive mode is applied for a duration equal to the applied HPLMN timer value.

At step 308, an active mode is entered from the inactive mode upon expiry of the applied HPLMN timer value. At step 310, a scanning operation is automatically performed to determine availability of any of the network cells 112A-N within a coverage area of the MTC device 104A. At step 312, it is determined whether any network cell is found within the coverage area of the MTC device 104A during the scanning operation. If the network cell (e.g., the network cell 112A) is found, then at step 314, the network cell is used for camping to transmit MTC data to the MTC server 110A, else the process 300 continues at step 310.

At step 316, size of MTC data that the MTC device 104A is allowed to transmit during the active period of the MTC device 104A is determined by querying the MTC network 102 via the camped network cell 112A. At step 318, MTC data is transmitted to the MTC server 110A associated with the MTC device 104A via the MTC network 102 during the active mode of the MTC device 104A based on the determination and the process continues at step 302. For example, the size of the MTC data transmitted to the MTC network 102 during the active period is less than or equal to the determined size of MTC data.

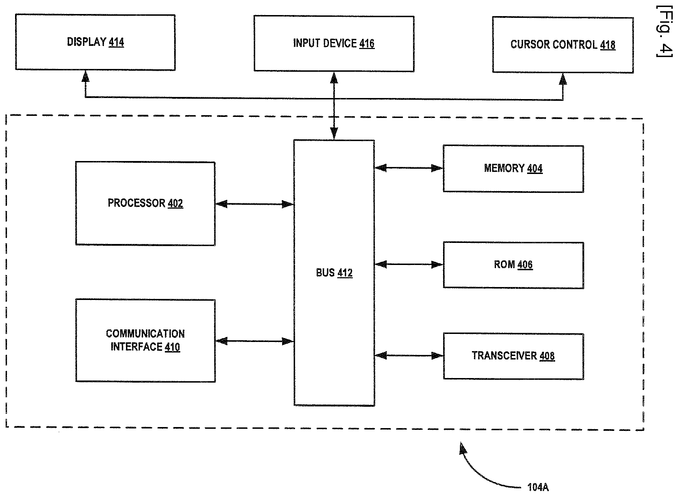

Figure 4 is a block diagram of the MTC device 104A showing various components for implementing embodiments of the present subject matter. In Figure 4, the MTC device 104A includes a processor 402, memory 404, a read only memory (ROM) 406, a transceiver 408, a bus 410, a communication interface 412, a display 414, an input device 416, and a cursor control 418.

The processor 402, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 402 may also include embedded controllers, such as generic or programmable logic devices or arrays, application specific integrated circuits, single-chip computers, smart cards, and the like.

The memory 404 and the ROM 406 may be volatile memory and non-volatile memory. The memory 404 includes instructions temporarily stored therein to communicate MTC data to the MTC network 102 in a time controller manner, according to the embodiments of the present subject matter. A variety of computer-readable storage media may be stored in and accessed from the memory elements. Memory elements may include any suitable memory device(s) for storing data and machine-readable instructions, such as random access memory, erasable programmable read only memory, electrically erasable programmable read only memory, hard drive, removable media drive for handling memory cards, Memory Sticks™, and the like.

Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by the processor 402. For example, a computer program may include machine-readable instructions capable of transmitting the MTC data to the MTC network 102 and applying a HPLMN timer value received from the MTC network 102 upon transmitting the MTC data, according to the teachings and herein described embodiments of the present subject matter. In one embodiment, the program may be included on a storage medium and loaded from the storage medium to a hard drive in the non-volatile memory. The machine-readable instructions may cause the MTC device 104A to encode according to the various embodiments of the present subject matter.

The transceiver 408 may be capable of transmitting the MTC data to the MTC network 102 and receiving a notification message including a HPLMN timer value from the MTC network 102 upon transmission of the MTC data. The bus 410 acts as interconnect between various components of the MTC device 104A. The components such as communication interfaces 412, the display 414, the input device 416, and the cursor control 418 are well known to the person skilled in the art and hence the explanation is thereof omitted.

Although, the foregoing description is made with reference to using a HPLMN timer value to control sleep and wake time of the MTC devices 104A-N, one skilled in the art will appreciate that the present invention can be practiced using any other specified timer value known to the person skilled in the art. The present embodiments have been described with reference to specific example embodiments, it will be evident that various modifications and changes may be made to these embodiments without departing from the broader spirit and scope of the various embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method performed by a Machine-to-Machine, M2M, type Communication, MTC, device (104) for communicating MTC data in a MTC network environment (102), comprising:
receiving (302) a notification message including a timer value from an MTC network (102);
entering (306), upon receiving (302) the notification message including the timer value for a duration equal to the timer value, an inactive mode;
entering (308), upon an expiration of the timer value, an active mode from the inactive mode;
determining (316) a size of MTC data that the MTC device (104) is allowed to transmit during the active period of the MTC device (104) by querying the MTC network (102) via a camped network cell (112); and
transmitting (318) MTC data to an MTC server (110) associated with the MTC device via the MTC network (102) during the active mode of the MTC device (104) based on the determination.

2. The method of claim 1, wherein the MTC device (104) repeats, upon completion of the transmission of the MTC data, receiving (302) the notification message, entering (306) the inactive mode, and entering (308) the active mode.

3. The method of claim 1, wherein the MTC device (104) receives (302) the notification message during an initial network attach procedure with the MTC network (102).

4. The method of claim 1, wherein entering (306) the inactive mode upon receiving (302) the notification message including the timer value for the duration equal to the timer value comprises:
applying (304) the timer value included in the notification message received from the MTC network (102); and
entering (306) the inactive mode for a duration equal to the applied timer value.

5. The method of claim 1, wherein before the step of determining (316) a size of MTC data that the MTC device (104) is allowed to transmit during the active period of the MTC device (104) by querying the MTC network (102) via a camped network cell (112), the method further comprises:
automatically performing (310) a scanning operation to determine an availability of a network cell (112) within a coverage area of the MTC device (104);
determining (312) whether any network cell (112) is found within the coverage area of the MTC device (104) during the scanning operation;
camping (314), if a network cell (112) is found within the coverage area during the scanning operation, on the found network cell (112) for transmitting the MTC data to the MTC server (110); and
if a network cell (112) is not found within the coverage area during the scanning operation, repeating automatically performing (310) the scanning operation and determining (312) whether any network cell (112) is found within the coverage area during the scanning operation until a network cell (112) within the coverage area is found.

6. The method of claim 1, wherein in transmitting (318) the MTC data to the MTC server (110) associated with the MTC device (104) via the MTC network (102), the determined size of the MTC data is at least equal to the size of the MTC data transmitted to the MTC network (102) during the active period.

7. A method performed by a Machine-to-Machine, M2M, type Communication, MTC, network for managing at least one MTC device (104) in an MTC network environment (102), comprising:
sending (202), to the at least one MTC device (104), a notification message including a timer value, wherein the timer value indicates an inactive period associated with the at least one MTC device (104);
receiving (204) a query from the at least one MTC device (104) to determine a maximum length of MTC data allowed for transmission by the at least one MTC device (104) ;
determining (206) a length of MTC data allowed for transmission by the at least one MTC device (104) during an active period of the at least one MTC device (104);
communicating (208) length information to the at least one MTC device (104) based on the determination of the length of MTC data allowed for transmission by the at least one MTC device (104) during the active period; and
receiving (210) MTC data intended for an associated MTC server (110) via an associated network cell during the active period of the at least one MTC device (104) based on the length information.

8. The method of claim 7, wherein the MTC network (102) repeats, upon completion of the reception (210) of the MTC data, sending (202) the notification message and receiving (210) the MTC data.

9. The method of claim 1, or the method of claim 7, wherein the timer value is a dynamic Home Public Land Mobile Network, HPLMN, timer value.

10. The method of claim 7, wherein the MTC network (102) sends (202) the notification message including the timer value to the at least one MTC device (104) during an initial network attach procedure with the at least one MTC device (104).

11. A Machine-to-Machine, M2M, type Communication, MTC, device (104) for communicating MTC data in an MTC network environment (102), the device (104) including a transceiver (408), and a processor (402), and being arranged to perform the method as defined in any one of claims 1 to 6.

12. A Machine-to-Machine, M2M, type Communication, MTC, network (102) for managing at least one MTC device (104) in an MTC network environment (102), the device including at least one network cell (112), at least one MTC server (110), and a processor (106), and being arranged to perform the method as defined in any one of claims 7 to 10.

## Patentansprüche

1. Ein durch eine Maschine-zu-Maschine-Typkommunikationsvorrichtung (Machine-to-Machine, M2M, Type Communication, MTC) (104) durchgeführtes Verfahren zur Übermittlung von MTC-Daten in einer MTC-Netzwerkumgebung (102), wobei das Verfahren Folgendes umfasst:
Empfangen (302) einer Benachrichtigungsmeldung einschließlich eines Zeitgeberwerts von einem MTC-Netzwerk (102);
Übergehen (306) in einen inaktiven Modus infolge des Empfangs (302) der Benachrichtigungsmeldung einschließlich des Zeitgeberwerts für eine dem Zeitgeberwert entsprechende Dauer;
Übergehen (308) aus dem inaktiven Modus in einen aktiven Modus infolge eines Ablaufs des Zeitgeberwerts;
Bestimmen (316) einer Größe von MTC-Daten, für welche die Übertragung durch die MTC-Vorrichtung (104) während der aktiven Periode der MTC-Vorrichtung (104) zulässig ist, indem das MTC-Netzwerk (102) über eine kampierte Netzwerkzelle (112) abgefragt wird; und
Übertragen (318) von MTC-Daten an einen MTC-Server (110) im Zusammenhang mit der MTC-Vorrichtung über das MTC-Netzwerk (102) während des aktiven Modus der MTC-Vorrichtung (104), wobei dies basierend auf der Bestimmung erfolgt.

2. Das Verfahren nach Anspruch 1, wobei die MTC-Vorrichtung (104) infolge des Abschlusses der Übertragung der MTC-Daten den Empfang (302) der Benachrichtigungsmeldung, den Übergang (306) in den inaktiven Modus und den Übergang (308) in den aktiven Modus wiederholt.

3. Das Verfahren nach Anspruch 1, wobei die MTC-Vorrichtung (104) die Benachrichtigungsmeldung während eines ersten Netzwerkverbindungsvorgangs mit dem MTC-Netzwerk (102) empfängt (302).

4. Das Verfahren nach Anspruch 1, wobei der Übergang (306) in den inaktiven Modus infolge des Empfangs (302) der Benachrichtigungsmeldung einschließlich des Zeitgeberwerts für die dem Zeitgeberwert entsprechende Dauer Folgendes umfasst:
Anwenden (304) des Zeitgeberwerts, der in der von dem MTC-Netzwerk (102) empfangenen Benachrichtigungsmeldung enthalten ist; und
Übergehen (306) in den inaktiven Modus für eine dem angewendeten Zeitgeberwert entsprechende Dauer.

5. Das Verfahren nach Anspruch 1, wobei das Verfahren vor dem Schritt der Bestimmung (316) einer Größe von MTC-Daten, für welche die Übertragung durch die MTC-Vorrichtung (104) während der aktiven Periode der MTC-Vorrichtung (104) zulässig ist, indem das MTC-Netzwerk (102) über eine kampierte Netzwerkzelle (112) abgefragt wird, weiter Folgendes umfasst:
automatisches Durchführen (310) eines Suchvorgangs, um eine Verfügbarkeit einer Netzwerkzelle (112) innerhalb eines Versorgungsbereichs der MTC-Vorrichtung (104) zu ermitteln;
Bestimmen (312), ob während des Suchvorgangs eine beliebige Netzwerkzelle (112) innerhalb des Versorgungsbereichs der MTC-Vorrichtung (104) ermittelt wurde;
Kampieren (314) auf der ermittelten Netzwerkzelle (112) zur Übertragung der MTC-Daten an den MTC-Server (110), wenn eine Netzwerkzelle (112) während des Suchvorgangs innerhalb des Versorgungsbereichs ermittelt wird; und
im Falle, dass keine Netzwerkzelle (112) während des Suchvorgangs innerhalb des Versorgungsbereichs ermittelt wird, Wiederholen der automatischen Durchführung (310) des Suchvorgangs und Bestimmen (312), ob eine beliebige Netzwerkzelle (112) während des Suchvorgangs innerhalb des Versorgungsbereichs ermittelt wurde, bis eine Netzwerkzelle (112) innerhalb des Versorgungsbereichs ermittelt wird.

6. Das Verfahren nach Anspruch 1, wobei bei der Übertragung (318) der MTC-Daten an den MTC-Server (110) im Zusammenhang mit der MTC-Vorrichtung (104) über das MTC-Netzwerk (102) die bestimmte Größe der MTC-Daten mindestens der Größe der MTC-Daten entspricht, die während der aktiven Periode an das MTC-Netzwerk (102) übertragen wurden.

7. Ein durch ein Maschine-zu-Maschine-Typkommunikationsnetzwerk (Machine-to-Machine, M2M, Type Communication, MTC) durchgeführtes Verfahren zur Verwaltung von mindestens einer MTC-Vorrichtung (104) in einer MTC-Netzwerkumgebung (102), wobei das Verfahren Folgendes umfasst:
Senden (202) einer Benachrichtigungsmeldung einschließlich eines Zeitgeberwerts an die mindestens eine MTC-Vorrichtung (104), wobei der Zeitgeberwert eine inaktive Periode im Zusammenhang mit der mindestens einen MTC-Vorrichtung (104) angibt;
Empfangen (204) einer Abfrage von der mindestens einen MTC-Vorrichtung (104) zur Bestimmung einer maximalen Länge von MTC-Daten, für welche die Übertragung durch die mindestens eine MTC-Vorrichtung (104) zulässig ist;
Bestimmen (206) einer Länge von MTC-Daten, für welche die Übertragung durch die mindestens eine MTC-Vorrichtung (104) während einer aktiven Periode der mindestens einen MTC-Vorrichtung (104) zulässig ist;
Übermitteln (208) von Längeninformationen an die mindestens eine MTC-Vorrichtung (104) basierend auf der Bestimmung der Länge von MTC-Daten, für welche die Übertragung durch die mindestens eine MTC-Vorrichtung (104) während der aktiven Periode zulässig ist; und Empfangen (210) von für einen verknüpften MTC-Server (110) vorgesehenen MTC-Daten über eine verknüpfte Netzwerkzelle während der aktiven Periode der mindestens einen MTC-Vorrichtung (104), wobei dies basierend auf den Längeninformationen erfolgt.

8. Das Verfahren nach Anspruch 7, wobei das MTC-Netzwerk (102) infolge des Abschlusses des Empfangs (210) der MTC-Daten den Versand (202) der Benachrichtigungsmeldung und den Empfang (210) der MTC-Daten wiederholt.

9. Das Verfahren nach Anspruch 1 oder das Verfahren nach Anspruch 7, wobei es sich bei dem Zeitgeberwert um einen dynamischen Zeitgeberwert eines öffentlichen terrestrischen Heim-Mobilfunknetzes (Home Public Land Mobile Network, HPLMN) handelt.

10. Das Verfahren nach Anspruch 7, wobei das MTC-Netzwerk (102) die Benachrichtigungsmeldung einschließlich des Zeitgeberwerts während eines ersten Netzwerkverbindungsvorgangs mit der mindestens einen MTC-Vorrichtung (104) an die mindestens eine MTC-Vorrichtung (104) sendet (202).

11. Eine Maschine-zu-Maschine-Typkommunikationsvorrichtung (Machine-to-Machine, M2M, Type Communication, MTC) (104) zur Übermittlung von MTC-Daten in einer MTC-Netzwerkumgebung (102), wobei die Vorrichtung (104) eine Sende-/Empfangseinheit (408) sowie einen Prozessor (402) umfasst und eingerichtet ist, um das Verfahren nach einem der Ansprüche 1 bis 6 durchzuführen.

12. Ein Maschine-zu-Maschine-Typkommunikationsnetzwerk (Machine-to-Machine, M2M, Type Communication, MTC) (102) zur Verwaltung von mindestens einer MTC-Vorrichtung (104) in einer MTC-Netzwerkumgebung (102), wobei die Vorrichtung mindestens eine Netzwerkzelle (112), mindestens einen MTC-Server (110) und einen Prozessor (106) umfasst und eingerichtet ist, um das Verfahren nach einem der Ansprüche 7 bis 10 durchzuführen.

## Revendications

1. Un procédé exécuté par un dispositif de communication de type machine à machine, M2M, MTC, (104) destiné à la communication de données MTC dans un environnement de réseau MTC (102), comprenant :
la réception (302) d'un message de notification contenant une valeur d'horloge à partir d'un réseau MTC (102),
l'entrée (306), après la réception (302) du message de notification contenant la valeur d'horloge, pendant une durée égale à la valeur d'horloge dans un mode inactif,
l'entrée (308), après l'expiration de la valeur d'horloge, dans un mode actif à partir du mode inactif,
la détermination (316) d'une taille de données MTC que le dispositif MTC (104) est autorisé à transmettre au cours de la période active du dispositif MTC (104) par l'interrogation du réseau MTC (102) par l'intermédiaire d'une cellule de réseau occupée (112), et
la transmission (318) de données MTC à un serveur MTC (110) associé au dispositif MTC par l'intermédiaire du réseau MTC (102) au cours du mode actif du dispositif MTC (104) en fonction de la détermination.

2. Le procédé selon la Revendication 1, où le dispositif MTC (104) répète, après l'achèvement de la transmission des données MTC, la réception (302) du message de notification, l'entrée (306) dans le mode inactif et l'entrée (308) dans le mode actif

3. Le procédé selon la Revendication 1, où le dispositif MTC (104) reçoit (302) le message de notification au cours d'une procédure de rattachement au réseau initiale avec le réseau MTC (102).

4. Le procédé selon la Revendication 1, où l'entrée (306) dans le mode inactif après la réception (302) du message de notification contenant la valeur d'horloge pendant la durée égale à la valeur d'horloge comprend :
l'application (304) de la valeur d'horloge incluse dans le message de notification reçu du réseau MTC (102), et
l'entrée (306) dans le mode inactif pendant une durée égale à la valeur d'horloge appliquée.

5. Le procédé selon la Revendication 1, où, avant l'opération de détermination (316) d'une taille de données MTC que le dispositif MTC (104) est autorisé à transmettre au cours de la période active du dispositif MTC (104) par l'interrogation du réseau MTC (102) par l'intermédiaire d'une cellule de réseau occupée (112), le procédé comprend en outre :
l'exécution automatique (310) d'une opération de balayage de façon à déterminer une disponibilité d'une cellule de réseau (112) à l'intérieur d'une zone de couverture du dispositif MTC (104),
la détermination (312) si une cellule de réseau quelconque (112) est trouvée à l'intérieur de la zone de couverture du dispositif MTC (104) au cours de l'opération de balayage,
l'occupation (314), si une cellule de réseau (112) est trouvée à l'intérieur de la zone de couverture au cours de l'opération de balayage, de la cellule de réseau trouvée (112) pour la transmission des données MTC au serveur MTC (110), et
si une cellule de réseau (112) n'est pas trouvée à l'intérieur de la zone de couverture au cours de l'opération de balayage, la répétition de l'exécution automatique (310) de l'opération de balayage et la détermination (312) si une cellule de réseau quelconque (112) est trouvée à l'intérieur de la zone de couverture au cours de l'opération de balayage jusqu'à ce qu'une cellule de réseau (112) à l'intérieur de la zone de couverture soit trouvée.

6. Le procédé selon la Revendication 1, où, dans la transmission (318) des données MTC au serveur MTC (110) associé au dispositif MTC (104) par l'intermédiaire du réseau MTC (102), la taille déterminée des données MTC est au moins égale à la taille des données MTC transmises au réseau MTC (102) au cours de la période active.

7. Un procédé exécuté par un réseau de communication de type machine à machine, M2M, MTC, destiné à la gestion d'au moins un dispositif MTC (104) dans un environnement de réseau MTC (102), comprenant :
l'envoi (202), au au moins un dispositif MTC (104), d'un message de notification contenant une valeur d'horloge, où la valeur d'horloge indique une période inactive associée au au moins un dispositif MTC (104),
la réception (204) d'une requête à partir du au moins un dispositif MTC (104) de façon à déterminer une longueur maximale de données MTC autorisée pour une transmission par le au moins un dispositif MTC (104),
la détermination (206) d'une longueur de données MTC autorisée pour une transmission par le au moins un dispositif MTC (104) au cours d'une période active du au moins un dispositif MTC (104),
la communication (208) d'informations de longueur au au moins un dispositif MTC (104) en fonction de la détermination de la longueur de données MTC autorisée pour une transmission par le au moins un dispositif MTC (104) au cours de la période active, et
la réception (210) de données MTC destinées à un serveur MTC associé (110) par l'intermédiaire d'une cellule de réseau associée au cours de la période active du au moins un dispositif MTC (104) en fonction des informations de longueur.

8. Le procédé selon la Revendication 7, où le réseau MTC (102) répète, après l'achèvement de la réception (210) des données MTC, l'envoi (202) du message de notification et la réception (210) des données MTC.

9. Le procédé selon la Revendication 1, ou le procédé selon la Revendication 7, où la valeur d'horloge est une valeur d'horloge de réseau mobile terrestre public d'accueil, HPLMN, dynamique.

10. Le procédé selon la Revendication 7, où le réseau MTC (102) envoie (202) le message de notification contenant la valeur d'horloge au au moins un dispositif MTC (104) au cours d'une procédure de rattachement au réseau initiale avec le au moins un dispositif MTC (104).

11. Un dispositif de communication de type machine à machine, M2M, MTC, (104) destiné à une communication de données MTC dans un environnement de réseau MTC (102), le dispositif (104) comprenant un émetteur-récepteur (408) et un processeur (402), et étant agencé de façon à exécuter le procédé selon l'une quelconque des Revendications 1 à 6.

12. Un réseau de communication de type machine à machine, M2M, MTC, (102) destiné à la gestion d'au moins un dispositif MTC (104) dans un environnement de réseau MTC (102), le dispositif comprenant au moins une cellule de réseau (112), au moins un serveur MTC (110) et un processeur (106), et étant agencé de façon à exécuter le procédé selon l'une quelconque des Revendications 7 à 10.
